## Europäisches Patentamt
## European Patent Office
## Office européen des brevets

(11) Numéro de publication: **0 085 618**
**B1**

(12) # FASCICULE DE BREVET EUROPÉEN

(45) Date de publication du fascicule du brevet:
**02.07.86**

(51) Int. Cl.⁴: **F 16 L 3/12**

(21) Numéro de dépôt: **83400193.5**

(22) Date de dépôt: **28.01.83**

(54) **Support de canalisation.**

(30) Priorité: **02.02.82 FR 8201766**

(43) Date de publication de la demande:
**10.08.83 Bulletin 83/32**

(45) Mention de la délivrance du brevet:
**02.07.86 Bulletin 86/27**

(84) Etats contractants désignés:
**BE DE GB IT LU NL**

(56) Documents cité:
**FR-A-2 417 706**
**GB-A-1 066 155**
**GB-A-1 073 409**
**US-A-1 805 006**

(73) Titulaire: **Weiss, Jacques, 48, rue du 19 Janvier,
F-92380 Garches (FR)**

(72) Inventeur: **Weiss, Jacques, 48, rue du 19 Janvier,
F-92380 Garches (FR)**

(74) Mandataire: **Lernould, René, 3, rue de la porte,
F-91490 Milly- la- Forêt (FR)**

LIBER, STOCKHOLM 1986

## Description

L'invention concerne un dispositif servant à supporter les tuyaux ou canalisations et plus spécialement à la suspension des tuyaux au plafond des bâtiments.

Les objectifs de l'invention sont principalement de réaliser un dispositif de suspension simple à fabriquer, peu coûteux et facile à installer par montage sur des tiges de suspension fixées au plafond et qui, de surcroit présente une fois posé une rigidité suffisante pour assurer la stabilité des tuyaux.

Suivant l'invention le dispositif comprend un collier encerclant complètement le tuyau, prolongé par deux branches verticales de suspension appliquées l'une sur l'autre et présentant des pattes coudées traversées par la tige de suspension (US-A-1.805.006), et ce dispositif est caractérisé en ce que les dites pattes coudées sont espacées verticalement l'une de l'autre sur la tige de suspension de façon à assurer la rigidité de la fixation sur celle-ci.

Suivant une forme de réalisation deux pattes coudées sont formées sur la même branche, l'une par coudage de l'extrémité de cette branche, l'autre par découpage et repliage dans la partie intermédiaire de la branche, cette seconde patte coudée traversant l'autre branche verticale du collier par une découpure de cette dernière.

De préférence encore les deux branches de suspension qui sont appliquées l'une sur l'autre en position montée sont accrochées l'une à l'autre dans le sens vertical par une patte repliée de l'une des branches engagées dans une découpure correspondante de l'autre branche.

Le dispositif selon l'invention peut être fabriqué de façon simple et peu coûteuse par simple découpage, repliage et formage d'une bande métallique mince de largeur appropriée. Il se présente avant la pose sous un état préformé dans lequel les branches peuvent être écartée grâce à la souplesse du collier pour permettre un engagement latéral du tuyau. Les branches sont ensuite rapprochées et accrochées avant montage sur la tige de suspension.

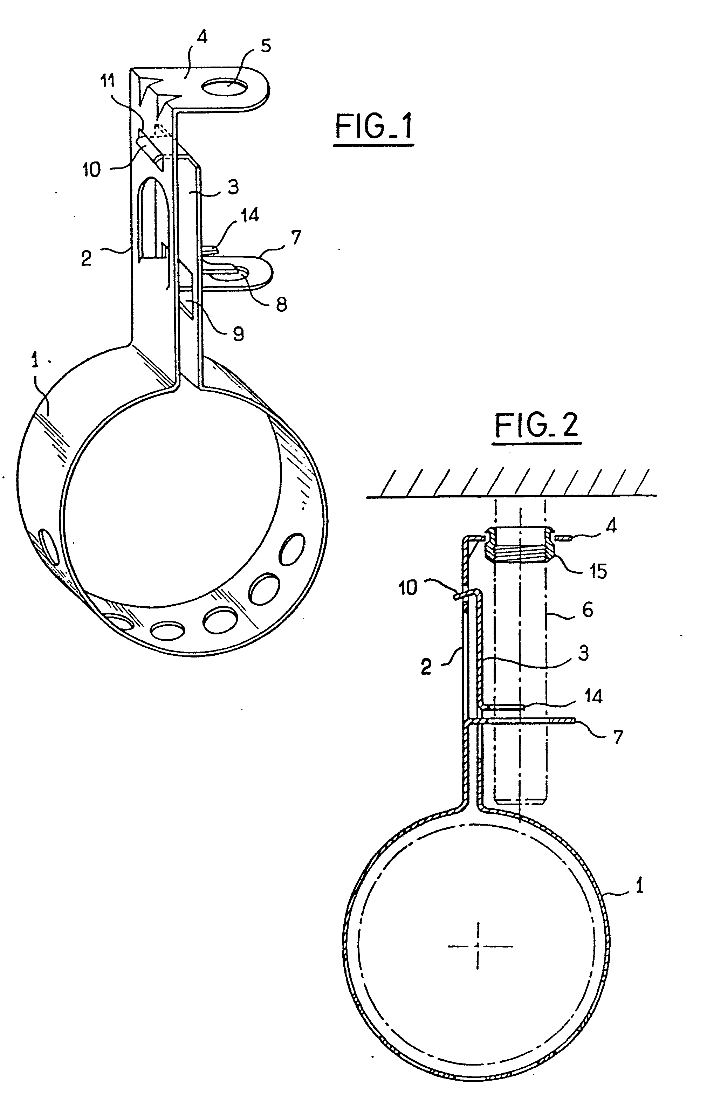

Un exemple de réalisation est décrit ci-après en référence au dessin ci-joint dans lequel la fig.1 est une vue en perspective du dispositif prêt à être monté et la fig. 2 une vue en élévation montrant le dispositif adapté sur sa tige de suspension.

Le dispositif comprend, formé dans une même bande de métal mince un collier circulaire 1 au diamètre approximatif du tuyau à suspendre, prolongé par deux branches verticales de suspension 2 et 3. L'extrémité de l'une 2 de ces branches est coudée pour former une patte horizontale 4 percée d'un trou 5 pour le passage de la tige de suspension 6.

La même branche 2 est en outre découpée dans sa partie intermédiaire pour former une seconde patte 7 percée d'un trou 8 pour la tige 6 et cette patte 7 est repliée horizontalement dans le même sens que la patte 4 en position verticalement espacée de celle-ci.

L'autre branche verticale 3 présente à hauteur correspondante une découpure 9 permettant à la patte coudée inférieure 7 de la traverser pour permettre de rapprocher et d'appliquer les deux branches 2, 3 l'une contre l'autre.

La branche 3, qui est plus courte que l'autre, présente à son extrémité une patte 10 repliée vers l'intérieur et correspondant à une découpure 11 de la branche 2.

En position montée, cette partie repliée assure l'accrochage des deux branches de suspension dans le sens vertical alors que la tige 6 engagée dans les deux pattes espacées 4 et 7 verrouille les deux branches en position rapprochées et accrochées l'une à l'autre.

La portion découpée dans la partie intermédiaire de la branche 3 pour le passage de la patte inférieure coudée 7 peut être utilisée pour former sur cette branche 3 une autre patte coudée 14 percée ou encochée pour le passage de l'extrémité de la tige 6. Cette patte 14 peut se substituer à la patte 7 ou la compléter dans sa fonction.

Enfin la portion de la bande métallique formant le collier 1 peut être perforée pour donner de la souplesse à cette partie pour faciliter l'ouverture du collier pour le montage latéral sur le tuyau.

Pour la fixation du collier en position montée sur la tige de suspension 6 on peut serrer la patte supérieure 4 entre un écrou et un contre-écrou vissés sur cette tige mais on peut plus avantageusement monter sur la patte 4 un écrou prisonnier 15 tournant librement sur cette patte.

## Revendications

1. Dispositif pour la suspension des tuyaux ou canalisations, du type comprenant un collier (1) encerclant complètement le tuyau, prolongé par deux branches verticales de suspension (2, 3) appliquées l'une sur l'autre et présentant des pattes coudées (4, 7) traversées par la tige de suspension (6), caractérisé en ce que lesdites pattes coudées (4, 7) sont espacées verticalement l'une de l'autre sur la tige de suspension de façon à assurer la rigidité de la fixation sur celle-ci.

2. Dispositif selon la revendication 1, caractérisé en ce que deux pattes coudées (4, 7) sont formées sur la même branche verticale (2), l'une (4) par coudage de l'extrémité de cette branche, l'autre (7) par découpage et repliage dans la partie intermédiaire de la branche, cette seconde patte coudée traversant l'autre branche verticale du collier par une découpure (9) de cette dernière.

3. Dispositif selon l'une des revendications 1 ou 2 caractérisé en ce que les deux branches de suspension qui sont appliquées l'une sur l'autre en position montée sont accrochées l'une à l'autre dans le sens vertical par une patte repliée (10) de l'une des branches engagées dans une découpure (11) correspondante de l'autre branche.

4. Dispositif selon l'une les revendications 1 à 3, caractérisé en ce que la patte d'accrochage (10) est formée à l'extrémité supérieure de la seconde branche (3).

5. Dispositif selon l'une des revendications 1 à 4, caractérisé en ce qu'une patte coudée (14) est formée par découpage dans la partie intermédiaire de la seconde branche (3), en position espacée verticalement de la patte coudée supérieure (4) de la première branche.

**Patentansprüche**

1. Vorrichtung zur Aufhängung von Rohren oder Leitungen mit einer das Rohr vollständig umgebenden Schelle (1), die durch zwei vertikale Aufhängungsabschnitte (2, 3) verlängert ist, welche aufeinander angeordnet sind und von dem Aufhängungsstift (6) durchsetzte, abgewinkelte Befestigungslappen (4, 7) aufweisen, dadurch gekennzeichnet, daß die abgewinkelten Befestigungslappen (4, 7) vertikal auf dem Aufhängungsstift in einer Weise voneinander beabstandet sind, die die Stehfestigkeit der Festlegung auf diesem sicherstellt.

2. Vorrichtung nach Anspruch 1, dadurch gekennzeichnet, daß die beiden abgewinkelten Befestigungslappen (4, 7) auf demselben vertikalen Abschnitt (2) ausgebildet sind, der eine (4) durch Abwinkelung des Endes dieses Abschnittes und der andere (7) durch Ausstanzen und Umbiegen im mittleren Bereich des Abschnittes, wobei dieser zweite abgewinkelte Befestigungslappen den anderen vertikalen Abschnitt der Schelle durch eine Durchbrechung (9) der letzteren hindurch durchsetzt.

3. Vorrichtung nach einem der Ansprüche 1 oder 2, dadurch gekennzeichnet, daß die zwei Aufhängungsabschnitte, die in ihrer Montagestellung aufeinander angeordnet sind, miteinander in der vertikalen Richtung durch eine von einem der Abschnitte abgebogene, in eine entsprechende Ausnehmung (11) des anderen Abschnittes eingreifende Klaue (10) verklammert sind.

4. Vorrichtung nach einem der Ansprüche 1 bis 3, dadurch gekennzeichnet, daß die Verklammerungsklaue (10) am oberen Ende des zweiten Abschnittes (3) ausgebildet ist.

5. Vorrichtung nach einem der Ansprüche 1 bis 4, dadurch gekennzeichnet, daß ein abgewinkelter Lappen (14) durch Ausstanzung im mittleren Bereich des zweiten Abschnittes (3) in einer Lage ausgebildet ist, die vertikal von dem oberen abgewinkelten Befestigungslappen (4) des ersten Abschnittes beabstandet ist.

**Claims**

1. Device for the suspension of pipes or ducting, of the kind comprising a collar (1) wholly encircling the pipe, extended by two vertical suspension limbs (2; 3) applied against each other and having bent lugs (4; 7) traversed by the suspension rod (6), characterised in that the said bent lugs (4; 7) are vertically spaced apart from each other on the suspension rod in such a manner as to assure rigidity of the fastening on to the same.

2. Device according to claim 1, characterised in that the two bent lugs (4; 7) are formed on the same vertical limb (2), the one (4) by bending the extremity of this limb, the other (7) by cutting and bending in the intermediate portion of the limb, this second bent lug passing through the other vertical limb of the collar via a cutout (9) of this latter.

3. Device according to one of claims 1 or 2, characterised in that the two suspension limbs which are applied against each other in the installed position are hooked to each other in the vertical direction by means of a bent lug (10) of the one of the limbs engaged in a corresponding cutout (11) of the other limb.

4. Device according to one of claims 1 to 3, characterised in that the hook-on lug (10) is formed at the upper extremity of the second limb (3).

5. Device according to one of claims 1 to 4, characterised in that a bent lug (14) is formed by cutting in the intermediate portion of the second limb (3) in a position spaced apart vertically from the upper bent lug (4) of the first limb.

0 085 618

FIG_1

FIG_2